# EUROPÄISCHE PATENTSCHRIFT

(11) **EP 3 037 682 B1**
(45) Veröffentlichungstag und Bekanntmachung des Hinweises auf die Patenterteilung: **15.01.2020**
(21) Anmeldenummer: 15192065.9
(22) Anmeldetag: 29.10.2015
(51) Int. Cl.: F16B 13/00, F16B 5/02, F16B 5/01, E04B 1/76

(54) **BEFESTIGUNGSELEMENT ZUR BEFESTIGUNG VON ANBAUTEILEN AN GEDÄMMTEN GEBÄUDEWÄNDEN**
FASTENING ELEMENT FOR FASTENING ATTACHED PARTS TO INSULATED BUILDING WALLS
ÉLEMENT DE FIXATION DESTINE A FIXER DES COMPOSANTS DE CONSTRUCTION SUR DES PAROIS DE BATIMENT ISOLEES

(30) Priorität: 22.12.2014 DE 202014010156 U
(43) Veröffentlichungstag der Anmeldung: 29.06.2016
(73) Patentinhaber: EJOT Baubefestigungen GmbH, 57334 Bad Laasphe (DE)
(72) Erfinder: Achenbach, René, 57334 Bad Laasphe (DE)
(74) Vertreter: Hohgardt, Martin

(56) Entgegenhaltungen:
- EP-A2- 1 293 685
- WO-A1-91/02877
- DE-U1-202007 009 063
- US-A1- 2006 222 474

## Beschreibung

Die vorliegende Erfindung betrifft ein Befestigungselement zur Befestigung von Anbauteilen an gedämmten Gebäudewänden, beispielsweise an einer mit Dämmstoff gedämmten Gebäudeaußenwand.

Zur Einsparung von Energie und der dadurch entstehenden Kosten sind effektive Dämmungen an Gebäudewänden von Vorteil. Hierfür wird Dämmstoff, meisten in Plattenform, mittels eines Klebers und/oder Dämmstoffhalters an der Gebäudewand angebracht.

Für die Montage von Anbauteilen, wie beispielsweise Fallrohrschellen, die zum Halten von Regenrinnen-Fallrohren dienen, oder zum Halten einer Außenbeleuchtung an der gedämmten Gebäudewand, werden Halterungen in den Dämmstoff eingebracht, an welchen danach die gewünschten Anbauteile befestigt werden können.

Für die Montage von Anbauteilen sind aus dem Stand der Technik verschiedene Befestigungselemente bekannt. Beispielsweise beschreibt die DE 20 2009 011 050 U1 ein Befestigungselement zum Eindrehen in einen Dämmstoff. Das Befestigungselement hat einen Schaft, der sich zu einem Ende hin verjüngt. Weiterhin ist entlang des Schaftes ein Außengenwinde angebracht, womit sich der Schaft in den Dämmstoff einschneiden kann. Das Ende des Schaftes, welches dem sich verjüngenden Ende gegenüberliegt, weist einen Gewindestift auf, an dem ein Anbauteil befestigt werden kann.

Die im Stand der Technik bekannten Befestigungselemente haben allerdings den Nachteil, dass diese Befestigungselemente keine Verbindung zum tragenden Mauerwerk haben. Dies hat im Speziellen bei der Montage von schwereren Anbauteilen den Nachteil, dass der Dämmstoff über die Grenzen seiner Gebrauchstauglichkeit hinaus stark verformt wird, bzw. dass eine Montage von schweren Lasten überhaupt nicht erfolgen kann.

Das Dokument DE 20 2007 009 063 U1 offenbart ein Befestigungselement zur Befestigung eines Sandwichelements an einer Unterkonstruktion.

Das Dokument EP 1 293 685 A2 offenbart einen Abstandshalter für die Befestigung eines Gegenstandes an einer eine Dämmschicht aufweisenden Wand.

Das Dokument WO 91/02877 A1 offenbart eine Befestigungshülse zum anpassbaren Befestigen von Türrahmen oder Fensterzargen an angrenzende Gebäudeteile.

Die Aufgabe der vorliegenden Erfindung ist daher, ein Befestigungselement bereitzustellen, mit dem auch schwerere Lasten an einer mit Dämmstoff verkleideten Gebäudewand gehalten werden können und welches mittels weniger Arbeitsgänge einfach und schnell montiert werden kann.

Diese Aufgabe wird erfindungsgemäß durch das zylinderförmige Befestigungselement gemäß Anspruch 1 gelöst.

Das erfindungsgemäße zylinderförmige Befestigungselement zum Befestigen eines Anbauteils an einer mit Dämmstoff gedämmten Gebäudewand hat eine durchgehenden Öffnung von einem ersten Endbereich des zylinderförmigen Befestigungselements zu einem zweiten Endbereich des zylinderförmigen Befestigungselements und einen Mantel, wobei das zylinderförmige Befestigungselement an dem ersten Endbereich ausgestaltet ist, um an dem zylinderförmigen Befestigungselement ein Anbauteil zu befestigen, und das zylinderförmige Befestigungselement an dem zweiten Endbereich derart ausgestaltet ist, dass ein in der durchgehenden Öffnung anordenbarer Kopf eines ersten Haltemittels in der Längserstreckung der durchgehenden Öffnung in Richtung des zweiten Endbereichs durch den zweiten Endbereich gehalten wird und der Mantel beim zweiten Endbereich eine Ausnehmung zum Anordnen des Haltemittelkopfes in der durchgehenden Öffnung aufweist.

Das zylinderförmige Befestigungselement kann die Form einer länglichen Buchse mit einer durchgehenden Öffnung haben. Das zylinderförmige Befestigungselement hat einen ersten Endbereich, welcher der Gebäudewand abgewandt ist, beispielswiese in Richtung des zu befestigten Anbauteils zeigt und in den meisten Fällen entweder teilweise aus dem Dämmstoff hervorsteht, vertieft in dem Dämmstoff sitzt, oder mit der Dämmstoffschicht oder einer auf der Dämmstoffschicht angebrachten Putzschicht abschließt. Der erste Endbereich ist ausgestaltet, um an dem Befestigungselement ein Anbauteil zu befestigen. Beispielsweise kann dies ein in dem zylinderförmigen Befestigungselement eingebrachter Gewindestab sein, der über den ersten Endbereich des Befestigungselements hervorsteht und an dem das Anbauteil beispielsweise mittels einer Mutter befestigt werden kann. Alternativ kann auch eine Gewindebuchse oder ein Gewindeeinsatz an dem ersten Endbereich des Befestigungselements angeordnet sein, beispielsweise in dessen durchgehender Öffnung befestigt sein und zur Aufnahme einer Schraube angepasst sein. Mittels einer solchen Schraube kann das Anbauteil befestigt werden. Hierbei kann die Schraube beispielsweise das Anbauteil, oder ein Teil des Anbauteils sein. Alternativ hierzu, oder ergänzend, kann das Anbauteil auch mittels einer Klebeverbindung befestigt werden. Der erste Endbereich kann sich von dem ersten Ende des Befestigungselements bis über die Mitte des Befestigungselements in Richtung des zweiten Endbereichs erstrecken.

Der zweite Endbereich, welcher der Gebäudewand zugewandt ist, d.h. dem ersten Endbereich gegenüberliegt und sich im montierten Zustand in dem Dämmstoff befindet, ist derart ausgestaltet, dass der Mantel des zylinderförmigen Befestigungselements beim zweiten Endbereich eine Ausnehmung zum Anordnen des Kopfes eines ersten Haltemittels in der durchgehenden Öffnung aufweist.

Der Mantel des zylinderförmigen Befestigungselements, der auch den Umfang des Befestigungselements definiert, weist erfindungsgemäß beim zweiten Endbereich, beispielsweise im unteren Drittel des Befestigungselements, eine Ausnehmung auf, durch die der Kopf des Halteelements hindurch passt. Diese Ausnehmung kann ein Schlitz sein, der im rechten Winkel zur Längserstreckung des zylinderförmigen Befestigungselements eingebracht ist und sich im montierten Zustand parallel zu der Oberfläche der Gebäudewand erstreckt. Der Schlitz kann sich am Mantel des Befestigungselements bis zur Hälfte des Querschnitts des Befestigungselements erstrecken, oder auch kleiner sein. Beispielsweise genügt es bereits, wenn der Schlitz so breit ist, dass es den Kopf eines in der Gebäudewand verankerbaren ersten Haltemittels aufnimmt.

Das zylinderförmige Befestigungselement ist an dem zweiten Endbereich weiterhin derart ausgestaltet, dass der in der durchgehenden Öffnung anordenbarer Kopf des ersten Haltemittels in der Längserstreckung der durchgehenden Öffnung in Richtung des zweiten Endbereichs durch den zweiten Endbereich gehalten wird. Beispielsweise kann der Kopf des ersten Haltemittels, der Kopf einer Dübelschraube sein und durch eine Verjüngung der durchgehenden Öffnung im zweiten Endbereich gehalten werden. Eine solche verjüngte Öffnung ist lediglich breit genug, um den Schaft der Dübelschraube hindurchstecken zu können, jedoch nicht breit genug für den Kopf der Dübelschraube. Der Kopf kann somit seitlich in das Befestigungselement geschoben werden. Die Ausnehmung kann sich bis an die Öffnung am zweiten Ende des zylinderförmigen Befestigungselements erstrecken, so dass im montierten Zustand, der Kopf der Dübelschraube in der Ausnehmung am zweiten Endbereich gehalten wird und der Schaft der Dübelschraube sich durch die durchgehende Öffnung in Richtung Gebäudewand erstreckt. Vorzugsweise wird während der Montage das erste Haltemittel frei drehbar in dem zylinderförmigen Befestigungselement gehalten, so dass das erste Haltemittel und das zylinderförmige Befestigungselement relativ zueinander verdreht werden können. Dies bewirkt, dass eine Drehbewegung des ersten Haltemittels nicht, oder nur minimal auf das zylinderförmige Befestigungselement übertragen wird.

Das zylinderförmige Befestigungselement wird beispielsweise montiert nachdem der Dämmstoff an der Gebäudewand befestigt wurde. Hierfür kann zunächst ein Loch, zum Beispiel mittels einer Bohrmaschine durch den Dämmstoff in die Gebäudewand erstellt werden. Danach wird der Kopf des ersten Haltemittels in die Ausnehmung am Mantel des zylinderförmigen Befestigungselements eingebracht, so dass das erste Haltemittel axial mit dem zylinderförmigen Befestigungselement gekoppelt ist. Weiterhin kann sich auch bereits eine Dübelhülse auf dem ersten Haltemittel befinden, so dass die Dübelhülse mit dem ersten Haltemittel und dem sich daran befindenden zylinderförmigen Befestigungselement in das Loch in der Gebäudewand eingebracht wird. Mittels eines langen Schraubendrehers oder eines entsprechenden Werkzeugs kann dann das zylinderförmige Befestigungselement montiert werden. Das Werkzeug kann durch das zylinderförmige Befestigungselement in eine entsprechende Geometrie an dem Kopf des ersten Haltemittels eingreifen und dadurch das erste Haltemittel in die Dübelhülse einbringen, bis der erste Endbereich des zylinderförmigen Befestigungselements beispielsweise mit der Oberfläche des Dämmstoffs oder der sich darauf befindlichen Putzschicht bündig abschließt. Nach der Montage des zylinderförmigen Befestigungselements in dem Dämmstoff, kann das Anbauteil an dem zylinderförmigen Befestigungselement befestigt werden, beispielsweise kann hierfür die durchgehende Öffnung in dem ersten Endbereich so ausgestaltet sein, dass es eine Schraube halten kann, welche beispielsweise das Anbauteil ist, oder mit dem Anbauteil verbunden ist. Hierfür kann die durchgehende Öffnung in dem ersten Endbereich beispielsweise ein Gewinde aufweisen, oder eine entsprechende Oberfläche haben, in die beim Einbringen der Schraube ein Gewinde erstellt werden kann. Dadurch kann das Anbauteil an der mit Dämmstoff gedämmten Gebäudewand gehalten werden.

Vorteilhaft kann das erfindungsgemäße zylinderförmige Befestigungselement auf Grund der Verbindung mit einem in der Gebäudewand verankerbaren ersten Haltemittels, durch die hierdurch erzeugte axiale Vorspannkraft, hohe axiale Zugkräfte aufnehmen und bildet somit eine steife Verbindungen zwischen dem Anbauteil und der Gebäudewand. Somit können auch große Lasten an der mit Dämmstoff gedämmten Gebäudewand gehalten werden. Weiterhin können unterschiedlich lange Haltemittel zum Einsatz kommen, so dass das zylinderförmige Befestigungselement mit unterschiedlichen Dämmstoffdicken verwendet werden kann.

In einer bevorzugten Ausführungsform weist das zylinderförmige Befestigungselement an dem äußeren Mantelumfang längsförmig, d.h. in der Montagerichtung in den Dämmstoff zwischen dem ersten und dem zweiten Endbereich mindestens eine flügelartige Hervorhebung auf. Beispielsweise kann diese mindestens eine flügelartige Hervorhebung stegförmig sein und einen dreieckigen oder rechteckigen Querschnitt haben. Diese mindestens eine flügelartige Hervorhebung schneidet sich, wenn das zylinderförmige Befestigungselement in den Dämmstoff eingebracht wird, zusätzlich in das Dämmstoffmaterial ein und trägt hierdurch zu einem stabilen Sitz des zylinderförmigen Befestigungselements in dem Dämmstoffmaterial bei. Dieser stabile Sitz bewirkt auch eine Sicherung gegen Verdrehen, so dass, wenn beispielsweise ein erstes Haltemittel in Form einer Dübelschraube, drehend in das Dämmstoffmaterial eingebracht wird, diese Drehbewegung von dem zylinderförmigen Befestigungselement nicht weiter fortgeführt wird.

In noch einer weiteren bevorzugten Ausführungsform weist das zylinderförmige Befestigungselement an dem äußeren Mantelumfang längsförmig, d.h. in der Montagerichtung in den Dämmstoff, zwischen dem ersten und dem zweiten Endbereich, zwei an dem Umfang gegenüberliegende, flügelartige Hervorhebungen auf. Bei der Montage werden diese flügelartigen Hervorhebungen vorzugsweise ungefähr im rechten Winkel zur Querkraft, d.h. zur Kraftrichtung der bei Belastung einwirkenden Kraft ausgerichtet. Die bei Belastung einwirkende Kraft kann beispielsweise die Gewichtskraft des Anbauteils sein, die lotrecht nach unten gerichtet ist. Wenn sich diese flügelartigen Hervorhebungen beispielsweise, wie oben beschrieben, 90° zur Gewichtskraft, der bei Belastung einwirkenden Kraft befinden, tragen diese Hervorhebungen dazu bei, dass das Dämmstoffmaterial weniger stark zur Kraftrichtung der bei Belastung einwirkenden Kraft verformt wird.

In einer bevorzugten Ausführungsform weist das zylinderförmige Befestigungselement an seinem ersten Endbereich einen Bund zur Auflage an den Dämmstoff auf. Dieser Bund kann beispielsweise an dem Rand am ersten Endbereich des zylinderförmigen Befestigungselements angebracht sein. Somit kann dieser Bund, wenn das zylinderförmige Befestigungselement vollständig montiert ist direkt auf der Dämmstoffoberfläche aufliegen oder auf einer Putzoberfläche aufliegen, die sich auf dem Dämmstoffmaterial befindet. Der Bund kann den Mantel des Befestigungselements kreisförmig umgeben und einen Durchmesser haben, der einige Millimeter bis Zentimeter größer ist als der Durchmesser des Mantels des zylinderförmigen Befestigungselements. Der Bund kann vorteilhaft als Tiefenanschlag verwendet werden und weiterhin vorteilhaft den Bereich des Dämmstoffs abdecken, in den der Mantel des zylinderförmigen Befestigungselements eingebracht wurde, um somit einen Flüssigkeitseintritt in den Dämmstoff zu verhindern.

In noch einer weiteren bevorzugten Ausführungsform werden die flügelartigen Hervorhebungen von dem zweiten Endbereich bis an den Bund geführt. Hierdurch können sich die flügelartigen Hervorhebungen vorteilhaft auf einer Putzschicht, beispielsweise einer Putzschale abstützen, die sich auf der Dämmstoffoberfläche befindet. Somit kann vorteilhaft die Quertragfähigkeit des zylinderförmigen Befestigungselements erhöht werden.

Erfindungsgemäß ist in der durchgehenden Öffnung des zylinderförmigen Befestigungselements mindestens eine Längsrippe angeordnet, die sich vorzugsweise von dem ersten Endbereich in Richtung des zweiten Endbereichs erstreckt. Diese mindestens eine Längsrippe dient der Aufnahme einer Schraube, die ein Teil des Anbauteils sein kann oder an der wiederum das Anbauteil befestigt werden kann. Beim drehenden Einbringen der Schraube kann ein entsprechendes Gewinde in die Längsrippengeometrie eingeschnitten werden, wodurch die Schraube axial fixiert wird. Wie bereits oben beschrieben wurde, ist der erste Endbereich des zylinderförmigen Befestigungselements derart ausgestaltet, dass daran ein Anbauteil befestigt werden kann. In der hier beschriebenen Ausführungsform erfolgt dies durch mindestens eine Längsrippe in der durchgehenden Öffnung. Beispielsweise ist die mindestens eine Längsrippe ein dünner Steg mit einem dreieckigen oder rechteckigen Querschnitt, der sich beispielsweise von dem Rand des zylinderförmigen Befestigungselements im ersten Endbereich oder von einer unter dem Rand liegenden Position in Richtung des zweiten Endbereichs erstreckt. Die mindestens eine Längsrippe kann sich von dem ersten Ende im ersten Endbereich des Befestigungselements bis über die Mitte des zylinderförmigen Befestigungselements in Richtung des zweiten Endbereichs, oder auch bis in den zweiten Endbereich hinein, erstrecken. Weiterhin können mehrere Längsrippen in der durchgehenden Öffnung des zylinderförmigen Befestigungselements angeordnet sein. Wie bereits oben beschrieben wurde, kann hierdurch beispielsweise eine Schraube in der durchgehenden Öffnung gehalten werden, die ein Teil des Anbauteils ist oder an der wiederum das Anbauteil befestigt ist. Abhängig von der Anzahl und der Höhe der Längsrippen können unterschiedliche Schraubengrößen verwendet werden.

In noch einer weiteren bevorzugten Ausführungsform haben die Längsrippen einen sich vergrößernden Querschnitt in Richtung des zweiten Endbereichs. Diese Vergrößerung kann beispielsweise stufenlos oder in mindestens einem stufenförmigen Übergang erfolgen. Der Querschnitt kann sich beispielsweise in Richtung des zweiten Endbereichs zur Mitte der durchgehenden Öffnung vergrößern, um somit beispielsweise die Spitze einer Schraube besser halten zu können.

In einer weiteren bevorzugten Ausführungsform weist das zylinderförmige Befestigungselement an dem äußeren Mantelumfang einen Führungskanal auf, zur Aufnahme eines zweiten Haltemittels. Beispielsweise kann dieser Führungskanal eine schlitzförmige Vertiefung in dem äußeren Mantelumfang sein, in welcher der Kopf eines zweiten Haltemittels gehalten werden kann. Beispielsweise kann das zweite Haltemittel eine weitere Dübelschraube sein, die beispielsweise in einem 45° Winkel zu dem ersten Haltemittel angeordnet ist und in einer in der Gebäudewand angeordneten Dübelhülse verankert sein. Alternativ kann das zweite Haltemittel, beispielsweise nagelförmig ausgebildet sein und in den Dämmstoff gesteckt werden, ohne direkt oder indirekt mit der Gebäudewand verbunden zu sein. Auch kann das zweite Haltemittel entgegen der von dem Anbauteil hervorgerufenen Gewichtskraft ausgerichtet sein, um somit das Befestigungselement waagrecht in dem Dämmstoff halten zu können. Eine Montage des zylinderförmigen Befestigungselements mit zwei Haltemitteln ist vorteilhaft wenn besonders schwere Anbauteile befestigt werden sollen.

In noch einer weiteren bevorzugten Ausführungsform weist das zylinderförmige Befestigungselement um den äußeren Mantelumfang, längsförmig zur Montagerichtung, zwischen dem ersten und dem zweiten Endbereich, eine schraubenartige Hervorhebung auf. Beispielsweise kann anstatt der oben beschriebenen flügelartigen Hervorhebungen der äußere Mantelumfang auch schraubenförmig ausgeprägt sein. In dieser Ausführungsform wird das zylinderförmige Befestigungselement bei der Montage drehend in den Dämmstoff eingebracht. Damit kann sich das zylinderförmige Befestigungselement in das Dämmstoffmaterial einschneiden, um hierdurch einen guten Halt in dem Dämmstoffmaterial zu erreichen.

In einer weiteren bevorzugten Ausführungsform besteht das zylinderförmige Befestigungselement aus Kunststoff. Beispielsweise kann das zylinderförmige Befestigungselement im Spritzgießverfahren hergestellt werden. Vorteilhaft ist ein aus Kunststoff hergestelltes Befestigungselement sehr leicht und hält gleichzeitig den mechanischen Belastungen gut stand. Auch kann das Auftreten von Wärmebrücken beim Einsatz aus Kunststoff hergestellter Befestigungselemente minimiert werden.

Im Folgenden wird das erfindungsgemäße zylinderförmige Befestigungselement beispielhaft anhand der in den nachfolgenden Figuren gezeigten Ausführungsformen näher erläutert. Es zeigen:
- Fig. 1a:: eine Frontansicht einer beispielhaften Ausführungsform des erfindungsgemäßen zylinderförmigen Befestigungselements,
- Fig. 1b:: einen Querschnitt einer beispielhaften Ausführungsform des erfindungsgemäßen zylinderförmigen Befestigungselements,
- Fig. 1c:: eine Perspektivansicht einer beispielhaften Ausführungsform des erfindungsgemäßen zylinderförmigen Befestigungselements, und
- Fig. 2:: eine Ansicht einer beispielhaften Ausführungsform des erfindungsgemäßen zylinderförmigen Befestigungselements zusammen mit einem Anbauteil und einem ersten Haltemittel vollständig montiert an einer gedämmten Gebäudewand.

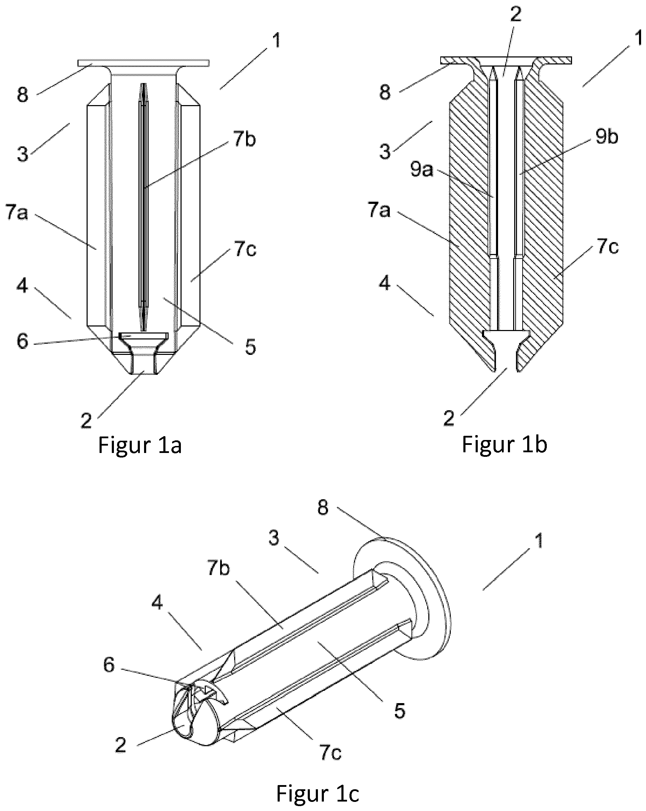

Figuren 1a bis 1c zeigen eine beispielhafte Ausführungsform des erfindungsgemäßen zylinderförmigen Befestigungselements 1. Das zylinderförmige Befestigungselement 1 hat eine durchgehenden Öffnung 2 von einem ersten Endbereich 3 des Befestigungselements 1 zu einem zweiten Endbereich 4 des zylinderförmigen Befestigungselements 1 und einen Mantel 5. Wie in den Figuren 1 gezeigt definiert der Mantel 5 die äußere Zylinderform des Befestigungselements 1.

In den Figuren wird auch eine Ausnehmung 6 beim zweiten Endbereich 4 gezeigt. Mit Hilfe dieser Ausnehmung 6 kann der Kopf eines ersten Haltemittels in der durchgehenden Öffnung 2 angeordnet werden. Dieser Ausnehmung 6 kann beispielswiese schlitzförmig ausgestaltet sein, so dass der Kopf des ersten Haltemittels hindurchgesteckt werden kann. In dem gezeigten Beispiel ist die Ausnehmung 6 zunächst schlitzartig ausgestaltet und geht im unteren Endbereich 4 in die durchgehende Öffnung 2 über. Dem Fachmann sind aber eine Vielzahl von Geometrien bekannt, wie die Ausnehmung 6 gestaltet werden kann, um den Kopf des ersten Haltemittels in der durchgehenden Öffnung 2 anzuordnen.

Damit der Kopf des Haltemittels nicht durch die durchgehende Öffnung 2 in Richtung des zweiten Endbereichs 4 hindurchrutschen kann, ist der zweite Endbereich 4 derart ausgestaltet, dass der Kopf des Haltemittels durch den zweiten Endbereich 2 gehalten wird. Hierfür ist in dem gezeigten Beispiel im zweiten Endbereich 4 die durchgehende Öffnung 2 verjüngt. Wie in den Figuren 1 gezeigt, ist diese verjüngte Öffnung 2 lediglich breit genug, um den Schaft der Dübelschraube hindurchstecken zu können, jedoch nicht breit genug für den Kopf der Dübelschraube.

Die in den Figuren 1a bis 1c gezeigte, beispielhafte Ausführungsform hat an dem äußeren Umfang des Mantels 5, zwischen dem ersten 3 und dem zweiten 4 Endbereich mehrere flügelartige Hervorhebungen 7a, 7b, 7c. In dem gezeigten Beispiel sind die Hervorhebungen im zweiten Endbereich 4 abgeschrägt, so dass das zylinderförmige Befestigungselement 1 leichter in den Dämmstoff hineinbewegt werden kann. In dem in den Figuren 1a bis 1c gezeigten Beispiel sind flügelartige Hervorhebungen 7a, 7b, 7c jeweils um 90° versetzt an dem äußeren Mantelumfang 5 angeordnet. Je nach Einsatzgebiet können sich aber mehr oder weniger Hervorhebungen 7a, 7b, 7c an dem äußeren Umfang des Mantels 5 befinden. Auch ist dem Fachmann bekannt, dass sich die flügelartigen Hervorhebungen 7a, 7b, 7c über die gesamte Länge des äußeren Mantelumfangs 5 erstrecken können, oder sich auch nur auf einem kleinen Bereich zwischen dem ersten 3 und dem zweiten 4 Endbereich befinden können.

Die Figuren 1a bis 1c zeigen auch einen Bund 8, der sich in dem ersten Endbereich 3 an dem Rand des zylinderförmigen Befestigungselements 1 befindet. In dem gezeigten Beispiel ist der Bund 8 ringförmig, so dass wenn das zylinderförmige Befestigungselement vollständig montiert ist der Bund 8 auf der Dämmstoffoberfläche aufliegt oder auf der Putzschicht aufliegt, die sich auf der Dämmstoffoberfläche befinden kann. Der Fachmann kennt aber noch eine Vielzahl von anderen Möglichkeiten wie der Bund 8 ausgestaltet sein kann. Beispielsweise kann die äußere Geometrie des Bundes 8 auch rechteckig sein und der Bund 8 muss sich auch nicht am Rand des zylinderförmigen Befestigungselements 1 befinden, sondern kann sich im Bereich des ersten Endbereichs 3 auf einer bestimmten Position auf dem äußeren Umfang des Mantels 5 befinden.

In dem in Figur 1b gezeigten Querschnitt befinden sich auch mehrere Längsrippen 9a, 9b in der durchgehenden Öffnung 2 des zylinderförmigen Befestigungselements 1, die sich von dem ersten Endbereich 3 in Richtung des zweiten Endbereichs 4 erstrecken. Mit Hilfe dieser Längsrippen 9a, 9b kann ein Anbauteil befestigt werden. Beispielsweise kann eine Schraube in die durchgehende Öffnung 2 eingebracht werden und beim Einbringen sich mit dem Gewinde in das Material der Längsrippen 9a, 9b einschneiden, so dass eine zugfeste Verbindung entsteht. Je nach Einsatzgebiet können sich mehr oder weniger Längsrippen 9a, 9b in der durchgehenden Öffnung 2 mit einer unterschiedlichen Höhe und/oder Breite befinden.

In dem in Figur 1b gezeigten Beispiel haben die Längsrippen 9a, 9b einen sich stufenförmig vergrößernden Querschnitt in Richtung des zweiten Endbereichs 4. Dadurch kann beispielsweise die Spitze einer Schraube besser gehalten werden. Alternativ zu einer stufenförmigen Vergrößerung, könnte sich der Querschnitt aber auch stufenlos über die Länge der Längsrippen 9a, 9b vergrößern.

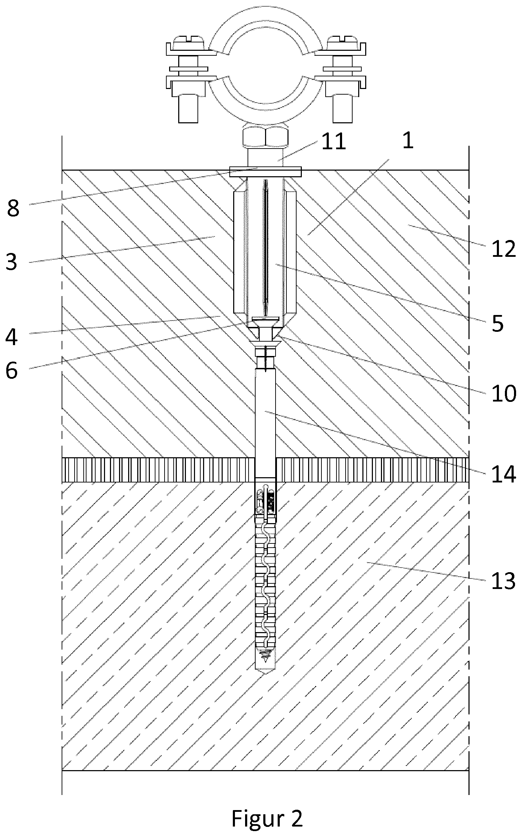

Die Figur 2 zeigt eine Ansicht der beispielhaften Ausführungsform des erfindungsgemäßen zylinderförmigen Befestigungselements 1 zusammen mit einem Anbauteil 11 und einem ersten Haltemittel vollständig montiert an einer mit Dämmstoff 12 gedämmten Gebäudewand 13. In dem gezeigten Beispiel ist das erste Haltemittel eine Dübelschraube mit einem Kopf 10. Die Dübelschraube ist mittels einer Dübelhülse 14 in einer Gebäudewand 13 verankert. Die Gebäudewand 13 kann beispielsweise aus Stein, Beton oder aus einem anderen geeigneten festen Material sein. In dem in Figur 2 gezeigten Beispiel wird der Kopf 10 der Dübelschraube am zweiten Endbereich 4 des zylinderförmigen Befestigungselements 1, wie oben beschrieben, gehalten.

In der Figur 2 wird auch gezeigt, dass der Bund 8 des zylinderförmigen Befestigungselements 1 auf der Oberfläche des Dämmstoffs 12 aufliegt und ein Anbauteil 11 in dem zylinderförmigen Befestigungselement 1 befestigt ist.

## Patentansprüche

1. Ein zylinderförmiges Befestigungselement (1) zum Befestigen eines Anbauteils (11) an einer mit Dämmstoff (12) gedämmten Gebäudewand (13), mit einer durchgehenden Öffnung (2) von einem ersten Endbereich (3) des zylinderförmigen Befestigungselements (1) zu einem zweiten Endbereich (4) des zylinderförmigen Befestigungselements (1) und mit einem Mantel (5), wobei
das Befestigungselement (1) an dem ersten Endbereich (3) ausgestaltet ist, um an dem zylinderförmigen Befestigungselement (1) ein Anbauteil (11) zu befestigen,
in der durchgehenden Öffnung (2) des zylinderförmigen Befestigungselements (1) mindestens eine Längsrippe (9a, 9b) angeordnet ist, die sich von dem ersten Endbereich (3) in Richtung des zweiten Endbereichs (4) erstreckt,
das zylinderförmige Befestigungselement (1) an dem zweiten Endbereich (4) derart ausgestaltet ist, dass ein in der durchgehenden Öffnung (2) anordenbarer Kopf (10) eines ersten Haltemittels in der Längserstreckung der durchgehenden Öffnung (2) in Richtung des zweiten Endbereichs durch den zweiten Endbereich (4) gehalten wird, und
der Mantel (5) beim zweiten Endbereich (4) eine Ausnehmung (6) zum Anordnen des Haltemittelkopfes (10) in der durchgehenden Öffnung (2) aufweist.

2. Das zylinderförmige Befestigungselement (1) nach Anspruch 1, wobei das zylinderförmige Befestigungselement (1) an dem äußeren Umfang des Mantels (5) längsförmig zur Montagerichtung in den Dämmstoff (12) zwischen dem ersten (3) und dem zweiten (4) Endbereich mindestens eine flügelartige Hervorhebung (7a, 7b, 7c) aufweist.

3. Das zylinderförmige Befestigungselement (1) nach Anspruch 1 oder 2, wobei das zylinderförmige Befestigungselement (1) an dem äußeren Umfang des Mantels (5) längsförmig zur Montagerichtung in den Dämmstoff (12), zwischen dem ersten (3) und dem zweiten (4) Endbereich, zwei an dem Umfang des Mantels (5) gegenüberliegende, flügelartige Hervorhebungen (7a, 7c) aufweist, die 90° zur Kraftrichtung der bei Belastung einwirkenden Kraft ausgerichtet sind.

4. Das zylinderförmige Befestigungselement (1) nach einem der Ansprüche 1 bis 3, wobei das zylinderförmige Befestigungselement (1) an seinem ersten Endbereich (3) einen Bund (8) zur Auflage an den Dämmstoff (12) aufweist.

5. Das zylinderförmige Befestigungselement (1) nach Anspruch 4, wobei die flügelartigen Hervorhebungen (7a, 7b, 7c) von dem zweiten Endbereich (4) bis an den Bund (8) geführt werden.

6. Das zylinderförmige Befestigungselement (1) nach Anspruch 1, wobei die Längsrippen (9a, 9b) einen sich vergrößernden Querschnitt in Richtung des zweiten Endbereichs (4) haben.

7. Das zylinderförmige Befestigungselement (1) nach einem der Ansprüche 1 bis 6, wobei das zylinderförmige Befestigungselement (1) an dem äußeren Umfang des Mantels (5) einen Führungskanal aufweist, zur Aufnahme eines zweiten Haltemittels.

8. Das zylinderförmige Befestigungselement (1) nach Anspruch 1, wobei das zylinderförmige Befestigungselement (1) um den äußeren Umfang des Mantels (5) längsförmig zur Montagerichtung, zwischen dem ersten (3) und dem zweiten (4) Endbereich, eine schraubenartige Hervorhebung aufweist.

9. Das zylinderförmige Befestigungselement (1) nach einem der Ansprüche 1 bis 8, wobei das zylinderförmige Befestigungselement (1) aus Kunststoff besteht.

## Claims

1. A cylindrical fastening element (1) for fastening an attachment part (11) to a building wall (13) insulated with insulating material (12), comprising a through opening (2) from a first end region (3) of the cylindrical fastening element (1) to a second end region (4) of the cylindrical fastening element (1) and comprising a sheet (5), wherein
the fastening element (1) is configured at the first end region (3) in order to fasten an attachment part (11) to the cylindrical fastening element (1),
at least one longitudinal rib (9a, 9b) is arranged in the through opening (2) of the cylindrical fastening element (1) and extends from the first end region (3) in the direction of the second end region (4),
the cylindrical fastening element (1) at the second end region (4) is adapted such that a head (10), which can be arranged in the through-opening (2), of a first holding means is held in the longitudinal extension of the through-opening (2) in the direction of the second end region by the second end region (4), and in the second end region (4), the sheet (5) has a recess (6) for arranging the holding means head (10) in the through opening (2).

2. The cylindrical fastening element (1) according to claim 1, wherein the cylindrical fastening element (1) on the outer circumference of the sheet (5) has at least one wing-like protrusion (7a, 7b, 7c) longitudinally to the mounting direction in the insulating material (12) between the first (3) and the second (4) end region.

3. The cylindrical fastening element (1) according to claim 1 or 2, wherein the cylindrical fastening element (1) has on the outer circumference of the sheet (5), longitudinally to the mounting direction in the insulating material (12), between the first (3) and the second (4) end region, two wing-like protrusions (7a, 7c) lying opposite one another on the circumference of the sheet (5) and oriented at 90° to the direction of force of the force acting under load.

4. The cylindrical fastening element (1) according to one of claims 1 to 3, wherein the cylindrical fastening element (1) comprises a collar (8) at its first end region (3) for bearing against the insulating material (12).

5. The cylindrical fastening element (1) according to claim 4, wherein the wing-like protrusions (7a, 7b, 7c) are guided from the second end region (4) to the collar (8).

6. The cylindrical fastening element (1) according to claim 1, wherein the longitudinal ribs (9a, 9b) comprise an increasing cross-section in the direction of the second end portion (4).

7. The cylindrical fastening element (1) according to one of claims 1 to 6, wherein the cylindrical fastening element (1) comprises a guide channel on the outer periphery of the sheet (5) for receiving a second holding means.

8. The cylindrical fastening element (1) according to claim 1, wherein the cylindrical fastening element (1) comprises a screw-like protrusion around the outer circumference of the sheet (5) longitudinally to the mounting direction, between the first (3) and the second (4) end region.

9. The cylindrical fastening element (1) according to any of claims 1 to 8, wherein the cylindrical fastening element (1) is made of plastic.

## Revendications

1. Un élément de fixation cylindrique (1) pour fixer une pièce rapportée (11) à une paroi de bâtiment (13) isolée avec du matériau isolant (12), comprenant un trou débouchant (2) depuis une première zone d'extrémité (3) de l'élément de fixation cylindrique (1) jusqu'à une seconde zone d'extrémité (4) de l'élément de fixation cylindrique (1) et comprenant une surface latérale (5), dans lequel
l'élément de fixation (1) est agencé dans la première zone d'extrémité (3) pour fixer à l'élément de fixation cylindrique (1) une pièce rapportée (11),
au moins une nervure longitudinale (9a, 9b)est disposée dans le trou débouchant (2) de l'élément de fixation cylindrique (1), qui s'étend depuis la première zone d'extrémité (3) en direction de la seconde zone d'extrémité (4),
l'élément de fixation cylindrique (1) est conçu dans la seconde zone d'extrémité (4) de façon qu'une tête (10), insérable dans le trou débouchant (2), d'un premier moyen de retenue soit retenue dans l'extension longitudinale du trou débouchant (2) en direction de la seconde zone d'extrémité par la seconde zone d'extrémité (4), et
la surface latérale (5) est pourvue dans la seconde zone d'extrémité (4) d'un évidement (6) pour disposer la tête de moyen de retenue (10) dans le trou débouchant (2) .

2. L'élément de fixation cylindrique (1) selon la revendication 1, dans lequel l'élément de fixation cylindrique (1) comporte, sur la périphérie extérieure de la surface latérale (5), entre la première (3) et la seconde (4) zone d'extrémité, au moins un relief en forme d'ailette (7a, 7b, 7c) qui s'étend longitudinalement au sens de montage dans le matériau isolant (12).

3. L'élément de fixation cylindrique (1) selon la revendication 1 ou 2, dans lequel l'élément de fixation cylindrique (1) comporte, sur la périphérie extérieure de la surface latérale (5) entre la première (3) et la seconde (4) zone d'extrémité, deux reliefs en forme d'ailette (7a, 7c) qui sont disposés en opposition sur la périphérie de la surface latérale (5), qui s'étendent longitudinalement au sens de montage dans le matériau isolant (12) et qui sont orientés à 90° par rapport à l'orientation de force de la force agissant lors de la mise en charge.

4. L'élément de fixation cylindrique (1) selon l'une des revendications 1 à 3, dans lequel l'élément de fixation cylindrique (1) comporte dans sa première zone d'extrémité (3) un collet (8) destiné à reposer sur le matériau isolant (12).

5. L'élément de fixation cylindrique (1) selon la revendication 4, dans lequel les reliefs en forme d'ailettes (7a, 7b, 7c) s'étendent de la seconde zone d'extrémité (4) jusqu'au collet (8).

6. L'élément de fixation cylindrique (1) selon la revendication 1, dans lequel les nervures longitudinales (9a, 9b) ont une section transversale croissante en direction de la seconde zone d'extrémité (4) .

7. L'élément de fixation cylindrique (1) selon l'une des revendications 1 à 6, dans lequel l'élément de fixation cylindrique (1) comporte sur la périphérie extérieure de la surface latérale (5) un canal de guidage pour recevoir un second moyen de retenue.

8. L'élément de fixation cylindrique (1) selon la revendication 1, dans lequel l'élément de fixation cylindrique (1) comporte autour de la périphérie extérieure de la surface latérale (5) un relief hélicoïdal qui s'étend longitudinalement au sens de montage et est disposé entre la première (3) et la seconde (4) zone d'extrémité.

9. L'élément de fixation cylindrique (1) selon l'une des revendications 1 à 8, dans lequel l'élément de fixation cylindrique (1) est constitué de matière synthétique.
